# EUROPÄISCHE PATENTANMELDUNG

(11) **EP 3 050 663 A1**
(43) Veröffentlichungstag der Anmeldung: **03.08.2016**
(21) Anmeldenummer: 16151311.4
(22) Anmeldetag: 14.01.2016
(51) Int. Cl.: B23K 26/00, B23K 26/02, B23K 26/03, B23K 26/08, B23K 26/352, B23K 37/047, B23K 37/04

(54) **VORRICHTUNG ZUM LASERSTRUKTURIEREN VON NABEN VON VENTILTRIEBBAUTEILEN**

(30) Priorität: 30.01.2015 DE 102015201689
(71) Anmelder: Mahle International GmbH, 70376 Stuttgart (DE)
(72) Erfinder: RIEGER, Ralf, 71711 Steinheim a.d. Murr (DE); UNRATH, Christoph, 73660 Urbach (DE)
(74) Vertreter: BRP Renaud & Partner mbB Rechtsanwälte Patentanwälte Steuerberater

(57) **Zusammenfassung**

Die Erfindung betrifft eine Vorrichtung (1) zum Laserstrukturieren von Naben (2) von Ventiltriebbauteilen (3). Erfindungswesentlich ist dabei, dass
- zumindest ein Ladungsträger (4) zum Bevorraten und Bereitstellen von zumindest zwei Ventiltriebbauteilen (3) vorgesehen ist,
- zumindest ein Laser (5) zum Laserstrukturieren einer Nabe (2) des Ventiltriebbauteils (3) vorgesehen ist,
- zumindest ein Roboterarm (6) mit wenigstens einer Greifeinrichtung (7) zum Greifen, Positionieren und Halten zumindest eines Ventiltriebbauteils (3) während des Laserstrukturierens vorgesehen ist, wobei der Roboterarm (6) zudem zum Entnehmen zumindest eines Ventiltriebbauteils (3) aus dem Ladungsträger (4) und Zuführen desselben zum Laser (5) ausgebildet ist.

Hierdurch kann eine kürzere Taktzeit erreicht werden.

## Beschreibung

Die vorliegende Erfindung betrifft eine Vorrichtung zum Laserstrukturieren von Naben von Ventiltriebbauteilen gemäß dem Oberbegriff des Anspruchs 1. Die Erfindung betrifft außerdem ein Laserstrukturierungsverfahren unter Verwendung einer derartigen Vorrichtung.

Um Ventiltriebbauteile, beispielsweise Nocken, zuverlässig auf einer zugehörigen Welle fixieren zu können, werden die miteinander in Kontakt tretenden Verbindungsflächen oftmals strukturiert, das heißt aufgeraut, wodurch eine Erhöhung des übertragbaren Drehmoments ermöglicht wird. Eine hierzu verwendete Laserstrukturierung bzw. Oberflächenaufrauhung erfolgt insbesondere im Bereich von thermischen Fügeverbindungen und/oder Presspassungen.

Aus der DE 103 25 910 A1 ist eine Vorrichtung zum Einbringen von Strukturen in Form von vorzugsweise linienartigen Vertiefungen in Anlageflächen von zwei kraftschlüssig miteinander verbundenen Körpern bekannt, wobei die in die zu behandelnde Anlagefläche einzubringenden Vertiefungen mittels eines Lasers eingebracht werden.

Aus der DE 103 62 303 B4 ist eine weitere gattungsgemäße Vorrichtung zum Einbringen von Vertiefungen in Anlageflächen zweier kraftschlüssig miteinander verbundener Körper durch Strahlenbehandlung mittels eines Lasers bekannt. Diese Vorrichtung weist zudem eine Schwenkspiegeleinrichtung mit einem Schwenkspiegel zum Umlenken des Laserstrahls auf die zu bearbeitenden Anlagefläche des Körpers auf, sowie eine Auflageeinrichtung zum Einspannen des Körpers, wobei die Auflageeinrichtung als drehbarer Rundtisch ausgeführt ist und die zumindest eine Schwenkspiegeleinrichtung am Außenumfang des Rundtisches angeordnet ist.

Aus der WO 2010/127862 A1 ist eine Laserstation zur Strukturierung von Innenumfangsflächen eines Werkstücks, beispielsweise einer Nocke einer Nockenwellen oder eines Pleuelauges eines Pleuels mit zumindest zwei zueinander versetzten 3D-Lasern bekannt. Der Laserstrahl der zumindest zwei 3D-Laser ist jeweils in X-, Y- und Z-Richtung steuerbar bzw. fokussierbar, wobei die Laser oberhalb, seitlich versetzt und hin zur Innenumfangsfläche geneigt angeordnet sind. Hierdurch soll eine effektive Strukturierung von Werkstücken ermöglicht werden.

Die vorliegende Erfindung beschäftigt sich mit dem Problem, für eine Vorrichtung der gattungsgemäßen Art eine verbesserte oder zumindest eine alternative Ausführungsform anzugeben, die insbesondere flexibel verwendbar ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, nicht mehr wie bisher eine feste Laserstation mit beispielsweise Umlenkspiegeln und einem drehbaren Rundtisch zu verwenden, auf welchem die zu bearbeitenden Bauteile, beispielsweise Ventiltriebbauteile, fixiert sind, sondern einen Roboterarm mit einer Greifeinrichtung vorzusehen, welcher je nach Programmierung das zu bearbeitende Bauteil, das heißt das jeweilige Ventiltriebbauteil, schnell, flexibel und exakt während eines Laserstrukturierens halten kann. Die erfindungsgemäße Vorrichtung zum Laserstrukturieren von Naben von Ventiltriebbauteilen besitzt dabei zumindest einen Ladungsträger zum Bevorraten und Bereitstellen von zumindest zwei Ventiltriebbauteilen sowie zumindest einen Laser zum Laserstrukturieren einer Nabe des zumindest einen Ventiltriebbauteils. Erfindungswesentlich ist dabei der Roboterarm mit seiner Greifeinrichtung zum Greifen, Positionieren und Halten zumindest eines Ventiltriebbauteils während des Laserstrukturierens, wobei dieser Roboterarm zudem zum Entnehmen des zumindest einen Ventiltriebbauteils aus dem Ladungsträger und Zuführen desselben zum Laser ausgebildet ist. Nach Abschluss des Laserstrukturierens ist der Roboterarm mittels einer Greifeinrichtung selbstverständlich auch in der Lage, das bearbeitete Ventiltriebbauteil wieder in den Ladungsträger zurückzulegen. Mittels der erfindungsgemäßen Vorrichtung ist ein deutlich flexibleres Arbeiten möglich, da die Greifeinrichtung und der Roboterarm auf unterschiedlichste Ventiltriebbauteile einfach mittels einer entsprechenden Programmierung angepasst werden können. Insbesondere ist kein Austausch beispielsweise eines entsprechenden Rundtisches mehr erforderlich. Ist der Roboterarm mit seiner Greifeinrichtung zudem in der Lage, gleichzeitig mehrere Ventiltriebbauteile zu greifen und während des Laserstrukturierens zu halten, kann auch die Taktzeit des eigentlichen Laserstrukturierens deutlich reduziert werden.

Zweckmäßig sind zumindest zwei Laser, insbesondere zwei 3D-Laser, zum simultanen Laserstrukturieren zumindest eines Ventiltriebbauteils vorgesehen. Hierbei ist beispielsweise denkbar, dass einer der zumindest zwei Laser oberhalb und der andere unterhalb des zu bearbeitenden Ventiltriebbauteils angeordnet ist. Selbstverständlich kann auch eine entsprechende Laserstation mit beispielsweise sechs Lasern vorgesehen werden, wobei in diesem Fall die Greifeinrichtung beispielsweise in der Lage ist, drei Ventiltriebbauteile gleichzeitig zu greifen und dadurch gleichzeitig während des Laserstrukturierens zu halten.

Zweckmäßig ist der zumindest eine Roboterarm verfahrbar. Durch die Verfahrbarkeit des Roboterarms können ein schnelleres Verfahren desselben und damit eine Reduzierung der Taktzeit erreicht werden. Denkbar ist hierbei selbstverständlich auch, dass der Roboterarm mit seiner Greifeinrichtung während des Verfahrens zugleich bewegt wird, wodurch die eigentliche Zeit zwischen zwei Stationen zusätzlich reduziert werden kann.

Bei einer weiteren vorteilhaften Ausführungsform der erfindungsgemäßen Lösung ist an dem zumindest einen Roboterarm eine Kamera zur Lageerkennung des zu greifenden Ventiltriebbauteils angeordnet. Zusätzlich kann eine Steuereinrichtung vorgesehen sein, die mit der Kamera kommunizierend verbunden ist und die Greifeinrichtung beim Erkennen einer Lageabweichung nachsteuert. Eine derartige Kamera am Roboterarm ist somit in der Lage, beispielsweise leicht in dem Ladungsträger verrutschte Ventiltriebbauteile trotzdem sicher und präzise greifen und in einer präzisen Position dem jeweiligen Laser zuführen zu können, da sie Positionsabweichungen erkennt und kompensieren kann. Hierdurch ist es möglich, deutlich geringere Toleranzanforderungen in Bezug auf die Positionierung der einzelnen Ventiltriebbauteile in den Ladungsträgern erfüllen zu müssen, wodurch ebenfalls Kosten eingespart werden können.

Zweckmäßig weist die Steuereinrichtung eine Kontrolleinrichtung auf, die ein optisches und/oder akustisches Kontrollsignal erzeugt, wenn der Laserstrukturierungsvorgang korrekt ausgeführt wurde. Eine derartige optische und/oder akustische Kontrolle kann beispielsweise wieder mittels eines entsprechenden Empfangsgeräts empfangen und aufgezeichnet werden, wodurch eine verbesserte Qualitätssicherung möglich ist. Selbstverständlich ist dabei auch denkbar, dass ein derartiges optisches und/oder akustisches Kontrollsignal lediglich von einem Werker stichprobenartig überprüft wird.

Die vorliegende Erfindung beruht weiter auf dem allgemeinen Gedanken, ein verbessertes Laserstrukturierungsverfahren unter Verwendung der zuvor beschriebenen Vorrichtung anzugeben, bei welchem zunächst zumindest ein Ladungsträger mit zumindest einem zu lasernden Ventiltriebbauteil bereitgestellt wird. Der Ladungsträger dient dabei als Depot und ist zur Aufnahme mehrerer Ventiltriebbauteile ausgebildet. Anschließend wird der zumindest eine Roboterarm samt Greifeinrichtung zum Ladungsträger gefahren, wobei während des Verfahrens gleichzeitig eine Bewegung des Roboterarms hinsichtlich seiner Gelenkachse erfolgen kann, wodurch Zeit eingespart werden kann. Anschließend lokalisiert die Steuerungseinrichtung über die Kamera das zumindest eine zu greifende Ventiltriebbauteil und richtet die Greifeinrichtung entsprechend aus. Hierbei ist es beispielsweise denkbar, dass die Kamera Fehlplatzierungen des zu greifenden Ventiltriebbauteils erkennt und die Greifeinrichtung des Roboterarms entsprechend ausrichtet und dadurch das zu bearbeitenden Ventiltriebbauteil zuverlässig und exakt ergreifen kann. Die Greifeinrichtung führt nun das zumindest eine Ventiltriebbauteil einer ersten Bearbeitungsposition zu, in welcher zumindest ein Laser das zumindest eine Ventiltriebbauteil laserstrukturiert. Anschließend kann das zumindest eine Ventiltriebbauteil mittels der Greifeinrichtung und dem Roboterarm wieder in den Ladungsträger zurückgelegt werden oder aber zumindest einer weiteren Bearbeitungsposition, in welcher eine weitere Laserstrukturierung der Nabe des Ventiltriebbauteils erfolgt, zugeführt werden. Ein solches zu bearbeitendes bzw. zu laserndes Ventiltriebbauteil kann beispielsweise ein Nocken, ein Geberrad oder ein Antriebsrad sein. Rein theoretisch können selbstverständlich auch zumindest zwei Roboterarme mit jeweils einer Greifeinrichtung vorgesehen sein, wobei der eine Roboterarm mit seiner Greifeinrichtung zumindest ein Ventiltriebbauteil greift und dem Laser zuführt, während der anderer Roboterarm mit seiner Greifeinrichtung ein zu bearbeitendes Ventiltriebbauteil gerade während des Laserstrukturierens fixiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße Vorrichtung zum Laserstrukturieren von Naben von Ventiltriebbauteilen,
- Fig. 2: eine Darstellung wie in Fig. 1, jedoch mit zwei Lasern und zwei Roboterarmen,
- Fig. 3: einen Roboterarm mit einer Greifeinrichtung zum gleichzeitigen Greifen von zwei Ventiltriebbauteilen.

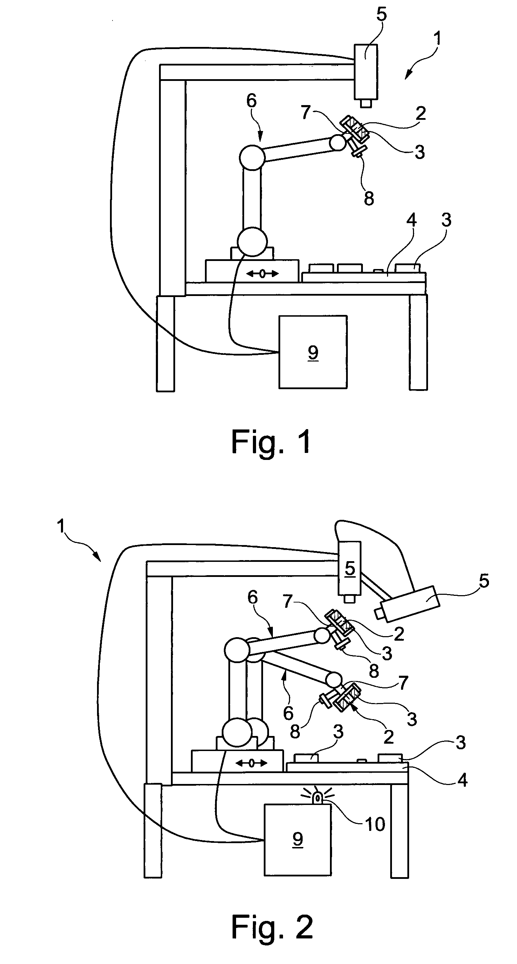

Entsprechend den Fig. 1 und 2, weist eine erfindungsgemäße Vorrichtung 1 zum Laserstrukturieren von Naben 2 und Ventiltriebbauteilen 3, beispielsweise Nocken, Geberrädern oder Antriebsrädern, zumindest einen Ladungsträger 4 zum Bevorraten und Bereitstellen von zumindest zwei Ventiltriebbauteilen 3 auf. Ebenfalls vorgesehen ist zumindest ein Laser 5 zum Laserstrukturieren der Nabe 2 des zumindest einen Ventiltriebbauteils 3, wobei der Laser 5 beispielsweise als sogenannter 3D-Laser ausgebildet sein kann. Die erfindungsgemäße Vorrichtung 1 weist zudem zumindest einen Roboterarm 6 mit jeweils einer Greifeinrichtung 7 zum Greifen, Positionieren und Halten zumindest eines Ventiltriebbauteils 3 während des Laserstrukturierens auf. Der Roboterarm 6 ist dabei über seine Greifeinrichtung 7 zudem in der Lage, zumindest ein Ventiltriebbauteil 3 aus dem Ladungsträger 4 zu entnehmen, dem Laser 5 zuzuführen, dieses dort während des Laserstrukturierens zu halten und anschließend wieder im Ladungsträger 4 abzulegen.
Gemäß einer vorteilhaften Weiterbildung der erfindungsgemäßen Lösung können auch zumindest zwei Laser 5 vorgesehen sein (vgl. Fig. 2), mittels welchen ein simultanes Lasern zumindest eines Ventiltriebbauteils 3 durchgeführt werden kann. Hierbei ist es denkbar, dass die zumindest zwei Laser 5 nebeneinander oder aber auch oberhalb und unterhalb des zu bearbeitenden Ventiltriebbauteils 3 angeordnet sind. Der zumindest eine Roboterarm 6 kann darüber hinaus verfahrbar sein, um beispielsweise eine Greifzeit zum Ergreifen des zu bearbeitenden Ventiltriebbauteils 3 im Ladungsträger 4 und dem Zuführen desselben zum Laser 5 zu verkürzen. "Verfahrbar" bedeutet in diesem Sinne, dass der Roboterarm 6 als Ganzes, beispielsweise auf Rädern, verfahren werden kann.

Gemäß der Fig. 2 ist dabei eine Vorrichtung 1 gezeigt, die nicht nur zwei Laser 5, sondern auch zwei Roboterarme 6 mit jeweils einer Greifeinrichtung 7 aufweist, wobei der eine Roboterarm 6 beispielsweise ein zu bearbeitendes Ventiltriebbauteil 3 aus dem Ladungsträger 4 entnimmt und dem Laser 5 zuführt, während der anderer Roboterarm 6 gleichzeitig das zu bearbeitende Ventiltriebbauteil 3 während des Laserstrukturierens hält.

Bei zumindest einem der Roboterarme 6 kann zudem eine Kamera 8 angeordnet sein, die in der Lage ist, eine Lage des zu greifenden Ventiltriebbauteils 3 zu erkennen und über eine Steuereinrichtung 9 die Greifeinrichtung 7 beim Erkennen einer Lageabweichung auszurichten bzw. nachzusteuern. Hierdurch kann immer gewährleistet werden, dass das zu bearbeitenden Ventiltriebbauteil 3 zuverlässig und exakt gegriffen und in einer exakten Position dem Laser 5 zugeführt und dort exakt laserstrukturiert werden kann.

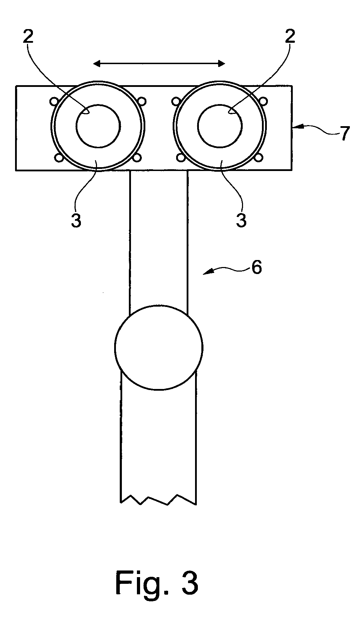

Die Fig. 3 zeigt beispielsweise einen Teil eines Roboterarms 6 mit einer endseitig daran angeordneten Greifeinrichtung 7, die in der Lage ist, zwei zu bearbeitende Ventiltriebbauteile 3 gleichzeitig zu greifen. Sind dabei in der jeweiligen Laserstation entsprechend viele Laser 5 angeordnet, so kann auch ein simultanes Laserstrukturieren von zwei oder mehr Ventiltriebbauteilen 3 erfolgen. Generell kann die Steuereinrichtung 9 zusätzlich noch eine Kontrolleinrichtung 10 aufweisen, die ein optisches und/oder ein akustisches Kontrollsignal erzeugt, sofern der Laserstrukturierungsvorgang korrekt ausgeführt wurde. Ein derartiges Kontrollsignal kann selbstverständlich auch Eingang in ein Qualitätssicherungsprotokoll finden, wodurch eine permanente Qualitätssicherung möglich ist.

Beim Laserstrukturieren einer Nabe 2 zumindest eines Ventiltriebbauteils 3 mit einer zuvor beschriebenen Vorrichtung 1 wird zunächst in einem ersten Arbeitsschritt zumindest ein zu laserndes Ventiltriebbauteil 3 in einem entsprechenden Ladungsträger 4 bereit gestellt. Anschließend wird der Roboterarm 6 zusammen mit seiner Greifeinrichtung 7 zum Ladungsträger 4 gefahren und dabei die Greifeinrichtung 7 mittels der Kamera 8 und der Steuerungseinrichtung 9 entsprechend zum zu greifenden Ventiltriebbauteil 3 ausgerichtet. Anschließend kann die Greifeinrichtung 7 das zumindest eine Ventiltriebbauteil 3 ergreifen, aus dem Ladungsträger 4 entnehmen und dem Laser 5 in einer ersten Bearbeitungsposition zuführen. In dieser ersten Bearbeitungsposition wird das zumindest eine Ventiltriebbauteil 3 mittels zumindest eines Lasers 5 laserstrukturiert, das heißt eine gewisse Rauigkeit an einer Innenoberfläche der Nabe 2 eingebracht. Anschließend kann die Greifeinrichtung 7 das zumindest eine Ventiltriebbauteil 3 einer zweiten oder weiteren Bearbeitungsposition zuführen, in welchen zumindest ein zweiter Laser 5 bzw. ein weiterer Laser 5 das Ventiltriebbauteil 3 weiter laserstrukturiert. Abschließend legt nun die Greifeinrichtung 7 das zumindest eine Ventiltriebbauteil 3 in den Ladungsträger 4 zurück.

Dabei ist selbstverständlich klar, dass die erfindungsgemäße Vorrichtung 1 nicht nur einen, sondern mehrere Roboterarme 6 mit einer oder mehreren Greifeinrichtung(en) 7 aufweisen kann, ebenso wie einen oder mehrere Laser 5, wodurch ein gleichzeitiges Laserstrukturieren von mehreren Ventiltriebbauteilen 3 möglich ist. Mittels der erfindungsgemäßen Vorrichtung 1 lässt sich nicht nur ein effektives, sondern auch besonders flexibles Laserstrukturieren von Ventiltriebbauteilen 3 erzielen, da bei unterschiedlichen Ventiltriebbauteilen 3 lediglich die Programmierung des Roboterarms 6 bzw. der Greifeinrichtung 7 und/oder des Lasers 5 entsprechend angepasst werden muss.

## Patentansprüche

1. Vorrichtung (1) zum Laserstrukturieren von Naben (2) von Ventiltriebbauteilen (3),
**dadurch gekennzeichnet, dass**
- zumindest ein Ladungsträger (4) zum Bevorraten und Bereitstellen von zumindest zwei Ventiltriebbauteilen (3) vorgesehen ist,
- zumindest ein Laser (5) zum Laserstrukturieren einer Nabe (2) des Ventiltriebbauteils (3) vorgesehen ist,
- zumindest ein Roboterarm (6) mit wenigstens einer Greifeinrichtung (7) zum Greifen, Positionieren und Halten zumindest eines Ventiltriebbauteils (3) während des Laserstrukturierens vorgesehen ist, wobei der Roboterarm (6) zudem zum Entnehmen zumindest eines Ventiltriebbauteils (3) aus dem Ladungsträger (4) und Zuführen desselben zum Laser (5) ausgebildet ist.

2. Vorrichtung nach Anspruch 1,
**dadurch gekennzeichnet,**
**dass** zumindest zwei Laser (5), insbesondere zwei 3D-Laser, zum simultanen Lasern zumindest eines Ventiltriebbauteils (3) vorgesehen sind.

3. Vorrichtung nach Anspruch 1 oder 2,
**dadurch gekennzeichnet,**
**dass** ein Laser (5) oberhalb und ein Laser (5) unterhalb des zu bearbeitenden Ventiltriebbauteils (3) angeordnet ist.

4. Vorrichtung nach einem der Ansprüche 1 bis 3,
**dadurch gekennzeichnet,**
**dass** der zumindest eine Roboterarm (6) verfahrbar ist.

5. Vorrichtung nach einem der Ansprüche 1 bis 4,
**dadurch gekennzeichnet,**
**dass** an dem zumindest einen Roboterarm (6) eine Kamera (8) zur Lageerkennung des zu greifenden Ventiltriebbauteils (3) angeordnet ist.

6. Vorrichtung nach Anspruch 5,
**dadurch gekennzeichnet,**
**dass** eine Steuereinrichtung (9) vorgesehen ist, die mit der Kamera (8) kommunizierend verbunden ist und die Greifeinrichtung (7) beim Erkennen einer Lageabweichung nachsteuert.

7. Vorrichtung nach Anspruch 6,
**dadurch gekennzeichnet,**
**dass** die Steuereinrichtung (9) eine Kontrolleinrichtung (10) aufweist, die ein optisches und/oder akustisches Kontrollsignal erzeugt, sofern der Laserstrukturierungsvorgang korrekt ausgeführt wurde.

8. Laserstrukturierungsverfahren unter Verwendung einer Vorrichtung (1) nach einem der Ansprüche 1 bis 7, bei dem
- zumindest ein Ladungsträger (4) mit zumindest einem zu lasernden Ventiltriebbauteil (3) bereitgestellt wird,
- zumindest ein Roboterarm (6) samt Greifeinrichtung (7) zum Ladungsträger (4) gefahren wird,
- die Steuereinrichtung (9) über die Kamera (8) das zumindest eine zu greifende Ventiltriebbauteil (3) lokalisiert und die Greifeinrichtung (7) entsprechend ausrichtet,
- die Greifeinrichtung (7) das zumindest eine Ventiltriebbauteil (3) greift und einer ersten Bearbeitungsposition zuführt,
- zumindest ein Laser (5) das zumindest eine Ventiltriebbauteil (3) laserstrukturiert,
- die Greifeinrichtung (7) das zumindest eine Ventiltriebbauteil (3) einer zweiten oder weiteren Bearbeitungsposition zuführt,
- der zumindest eine Laser (5) das zumindest eine Ventiltriebbauteil (3) laserstrukturiert,
- die Greifeinrichtung (7) das zumindest eine Ventiltriebbauteil (3) in den Ladungsträger (4) zurücklegt.
